# EUROPÄISCHE PATENTSCHRIFT

(11) **EP 1 915 689 B1**
(45) Veröffentlichungstag und Bekanntmachung des Hinweises auf die Patenterteilung: **26.11.2008**
(21) Anmeldenummer: 06777997.5
(22) Anmeldetag: 26.07.2006
(51) Int. Cl.: G06F 11/16, G06F 12/08

(54) **VERFAHREN XMD VORRICHTUNG ZUR ÜBERWACHUNG EINER SPEICHEREINHEIT IN EINEM MEHRPROZESSORSYSTEM**
METHOD AND DEVICE FOR MONITORING A MEMORY UNIT IN A MULTIPROCESSOR SYSTEM
PROCEDE ET DISPOSITIF POUR SURVEILLER UNE UNITE MEMOIRE D'UN SYSTEME A PLUSIEURS PROCESSEURS

(30) Priorität: 08.08.2005 DE 102005037248
(43) Veröffentlichungstag der Anmeldung: 30.04.2008
(73) Patentinhaber: ROBERT BOSCH GMBH, 70442 Stuttgart (DE)
(72) Erfinder: WEIBERLE, Reinhard, 71665 Vaihingen/enz (DE); MUELLER, Bernd, 70839 Gerlingen (DE); BOEHL, Eberhard, 72768 Reutlingen (DE); COLLANI, Yorck, 71717 Beilstein (DE); GMEHLICH, Rainer, 71254 Ditzingen (DE)
(86) Internationale Anmeldenummer: PCT/EP2006/064698
(87) Internationale Veröffentlichungsnummer: WO 2007/017389

(56) Entgegenhaltungen:
- EP-A- 0 863 464
- US-A- 5 822 767
- US-A1- 2004 059 875
- US-B1- 6 385 755
- US-B1- 6 640 313

## Beschreibung

### Stand der Technik

Die Erfindung geht aus von einem Verfahren und einer Vorrichtung zum Vergleich zwischen Ausgangsdaten wenigstens zweier Ausführungseinheiten eines Mikroprozessors gemäß den Oberbegriffen der unabhängigen Ansprüche.

Transiente Fehler, ausgelöst durch Alpha-Teilchen oder kosmische Strahlung, werden zunehmend ein Problem für integrierte Schaltungen. Durch abnehmende Strukturbreiten, sinkende Spannungen und höhere Taktfrequenzen nimmt die Wahrscheinlichkeit zu, dass eine Spannungsspitze, hervorgerufen durch ein Alpha-Teilchen oder kosmische Strahlung, einen logischen Wert in einer integrierten Schaltung verfälscht. Ein falsches Berechnungsresultat kann die Folge sein. In sicherheitsrelevanten Systemen müssen daher solche Fehler zuverlässig detektiert werden.

Bei sicherheitsrelevanten Systemen, wie z.B. einem ABS-Regelsystem in einem Kraftfahrzeug, in denen Fehlfunktionen der Elektronik sicher detektiert werden müssen, werden gerade bei den entsprechenden Steuereinrichtungen solcher Systeme üblicherweise Redundanzen zur Fehlererkennung vorgesehen. So ist beispielsweise in bekannten ABS-Systemen jeweils der komplette Mikrocontroller dupliziert, wobei die gesamten ABS-Funktionen redundant berechnet und auf Übereinstimmung geprüft werden. Tritt eine Diskrepanz der Ergebnisse auf, so wird das ABS-System abgeschaltet.

Solche Prozessoreinheiten mit wenigstens zwei integrierten Ausführungseinheiten sind auch als Dual-Core oder Multi-Core Architekturen bekannt. Die verschiedenen Ausführungseinheiten (Cores) führen redundant und taktsynchron das gleiche Programmsegment aus, die Ergebnisse der beiden Ausführungseinheiten werden verglichen, und ein Fehler wird dann bei dem Vergleich auf Übereinstimmung erkannt werden.

Prozessoren werden mit Caches ausgerüstet, um den Zugriff auf Instruktionen und Daten zu beschleunigen. Das ist bei der ständig wachsenden Datenmenge einerseits und der zunehmenden Komplexität der Datenverarbeitung mit immer schneller arbeitenden Prozessoren andererseits notwendig. Durch einen Cache wird der langsame Zugriff auf einen großen (Haupt-) Speicher teilweise vermieden und der Prozessor muss damit nicht auf die Bereitstellung der Daten warten. Es sind sowohl Caches ausschließlich für Befehle als auch ausschließlich für Daten bekannt, aber auch "Unified Caches", bei denen sowohl Daten als auch Instruktionen in demselben Cache abgelegt werden. Bekannt sind auch Systeme mit mehreren Levels (Hierarchiestufen) von Caches. Solche mehrstufigen Caches werden eingesetzt, um mit abgestuften Speichergrößen und verschiedenartigen Adressierungsstrategien der Caches auf den verschiedenen Levels eine optimale Anpassung der Geschwindigkeiten zwischen Prozessor und dem (Haupt-) Speicher vorzunehmen.

Der zweite Grund für den Einsatz von Caches ist das Vermeiden von Zugriffskonflikten aufden System- oder Speicherbus in einem Multiprozessorsystemen. Dort ist es üblich, jeden Prozessor mit einem Cache oder bei Multi-Level Caches mit entsprechend mehreren Caches auszurüsten.

In einer bekannten Anordnung von Caches in einem umschaltbarem Dual Core System besitzt jeder der zwei Cores einen fest zugeordneten Cache auf den der Core im Performanzmodus zugreift. Im Vergleichsmodus greifen beide Cores auf ihren jeweiligen Cache zu. Neben der Tatsache, dass im Vergleichsmodus ein Datum mehrfach im Cache gespeichert wird (für jede Ausführungseinheit separat), ist insbesondere der zeitliche Aufwand bei einem Wechsel vom Performanzmodus in den Vergleichsmodus beträchtlich. Bei diesem Wechsel muss der Zustand der Caches angeglichen werden. Erst dadurch wird gewährleistet, dass im Vergleichsmodus nicht der Fall eintritt, dass eine der am Vergleich beteiligten Ausführungseinheiten einen Cache-Miss (geforderte Datum ist nicht im Cache gespeichert und muss nachgeladen werden) hat und ein andere einen Cache-Hit (geforderte Datum ist im Cache gespeichert und muss nicht nachgehden werden).

### Vorteile der Erfindung

Aufgabe der Erfindung ist es bei einem Mehrprozessorsystem, dass die Nachteile der bisher bekannten Verfahren bei der Verwendung von Caches in einem umschaltbarem Mehrprozessorsystems vermieden werden. Als Nachteil stellt sich dabei vor allem dar, dass in bekannten Anordnungen von Caches diese aufwändig bei einer Umschaltung von einem Performanzmodus in einen Vergleichsmodus synchronisiert werden müssen

Für die Umschaltmöglichkeit zwischen verschiedenen Modi eines Mehrprozessorsystems wie Performanz- und Vergleichsmodus ist es vorteilhaft, wenn nicht jede Ausführungseinheit einen eigenen Cache besitzt, da insbesondere beim Umschalten in den Vergleichsmodus eine zeitraubende Angleichung der Caches vorgenommen werden müsste. Darauf kann in den vorgeschlagenen Strukturen weitgehend verzichtet werden.

Weiterhin ist es vorteilhaft wenn verschiedene Caches für die verschiedenen Modi (Vergleich bzw. Performanz) mit ihrer Größe den Anforderungen der Modi angepasst werden können. Weiterhin kann es vorteilhaft sein, dass in manchen Modi auf den Cache ganz verzichtet wird, insbesondere wenn der Buszugriff selbst nicht wesentlich langsamer als ein Cache-Zugriff ist.

Vorteilhaft ist ein Verfahren zur Steuerung eines Speicherzugriffs bei einem Rechnersystem mit wenigstens zwei Ausführungseinheiten beschrieben, wobei je Ausführungseinheit ein Zwischenspeicherbereich, insbesondere ein Cachespeicherbereich vorgesehen ist und weiterhin Umschaltmittel und Vergleichsmittel vorgesehen sind, wobei zwischen einem Performanzmodus und einem Vergleichsmodus umgeschaltet wird, dadurch gekennzeichnet, dass im Performanzmodus jede Ausführungseinheit auf den dieser jeweils zugeordneten Zwischenspeicherbereich zugreift und im Vergleichsmodus beide Ausführungseinheiten auf einen vorgebbaren Zwischenspeicherbereich zugreifen, wobei die Größen der Zwischenspeicherbereiche mittels des Umschaltmittels konfigurierbar sind, indem die genannten Größen dementsprechend für die in dem verschiedemen Modi angepaßten Aufgaben optimiert werden.

Die Merkmale des Oberbegriffe dieses Verfahrens werden in Dokument US-B-6 640 313 offenbart.

Vorteilhaft ist ein Verfahren beschrieben, dadurch gekennzeichnet, dass der Zwischenspeicherbereich auf den im Vergleichsmodus von beiden Ausführungseinheiten zugegriffen wird dem Zwischenspeicherbereich der im Performanzmodus einer Ausführungseinheit zugeordnet ist entspricht.

Vorteilhaft ist ein Verfahren beschrieben, dadurch gekennzeichnet, dass wenigstens ein zusätzlicher Zwischenspeicherbereich, insbesondere ein zusätzlicher Cachespeicherbereich, vorgesehen ist und im Vergleichsmodus von beiden Ausführungseinheiten auf diesen zusätzlichen Zwischenspeicherbereich zugegriffen wird.

Vorteilhaft ist ein Verfahren beschrieben, dadurch gekennzeichnet, dass wenigstens ein zusätzlicher Zwischenspeicherbereich vorgesehen ist und der Zwischenspeicherbereich auf den beide Ausführungseinheiten im Vergleichsmodus zugreifen sich aus dem zusätzlichen Zwischenspeicherbereich und einem Zwischenspeichereich der im Performanzmodus einer Ausführungseinheit zugeordnet ist zusammensetzt.

Vorteilhaft ist ein Verfahren beschrieben, dadurch gekennzeichnet, dass ein Größenverhältnis zwischen dem zusätzlichen Zwischenspeicherbereich und dem einer Ausführungseinheit im Performanzmodus zugeordneten Zwischenspeicherbereich auf die im Vergleichsmodus von beiden Ausführungseinheiten zugegriffen wird konfigurierbar ist.

Vorteilhaft ist ein Verfahren beschrieben, dadurch gekennzeichnet, dass im Vagleichsmodus auf den einer Ausführungseinheit zugeordneten Zwischenspeicherbereich nur lesend zugegriffen werden kann.

Vorteilhaft ist ein Verfahren beschrieben, dadurch gekennzeichnet, dass einer ersten Ausfiihrungseinheit im Performanzmodus ein erster Zwischenspeicherbereich und der zweiten Ausführungseinheit ein zweiter Zwischenspeicherbereich zugeordnet ist und im Vergleichsmodus der ersten Ausführungseinheit ein dritter Zwischenspeicherbereich zugeordnet ist und der zweiten Ausführungseinheit ein vierter Zwischenspeicherbereich.

Vorteilhaft ist ein Verfahren beschrieben, dadurch gekennzeichnet, dass im Vergleichsmodus von beiden Ausführungseinheiten auf den dritten und vierten Zwischenspeicherbereich zugegriffen wird.

Vorteilhaft ist ein Verfahren beschrieben, dadurch gekennzeichnet, dass im Vergleichsmodus von beiden Ausführungseinheiten auf die alle vier Zwischenspeicherbereiche zugegriffen wird.

Vorteilhaft ist ein Verfahren beschrieben, dadurch gekennzeichnet, dass im Vergleichsmodus auf den ersten und zweiten Zwischenspeicherbereich nur lesend zugegriffen werden kann.

Vorteilhaft ist ein Verfahren beschrieben, dadurch gekennzeichnet, dass jeweils ein Größenverhältnis zwischen dem ersten und dritten Zwischenspeicherbereich sowie zwischen dem zweiten und vierten Zwischenspeicherbereich konfigurierbar ist.

Vorteilhaft ist eine Vorrichtung zur Steuerung eines Speicherzugriffs bei einem Rechnersystem mit wenigstens zwei Ausführungseinheiten enthalten, wobei je Ausführungseinheit ein Zwischenspeicherbereich, insbesondere ein Cachespeicherbereich vorgesehen ist und weiterhin Umschaltmittel und Vergleichsmittel vorgesehen sind, wobei zwischen einem Performanzmodus und einem Vergleichsmodus umgeschaltet wird, dadurch gekennzeichnet, dass im Performanzmodus jede Ausführungseinheit auf den dieser jeweils zugeordneten Zwischenspeicherbereich zugreift und im Vergleichsmodus beide Ausführungseinheiten auf einen vorgebbaren Zwischenspeicherbereich zugreifen, wobei die Größen der Zwischenspeicherbereiche mittels des Umschaltmittels konfigurierbar sind, indem die genannten Größen dementsprechend für die in dem verschiedemen Modi angepaßten Aufgaben optimiert werden.

Die Merkmale des Oberbegriffs dieser Vorrichtung werden in Dokument US-B- 6 640 313 offenbart.

Vorteilhaft ist eine Vorrichtung enthalten, dadurch gekennzeichnet, dass der Zwischenspeicherbereich auf den im Vergleichsmodus von beiden Ausführungseinheiten zugegriffen wird dem Zwischenspeicherbereich der im Performanzmodus einer Ausführungseinheit zugeordnet ist entspricht.

Vorteilhaft ist eine Vorrichtung enthalten, dadurch gekennzeichnet, dass wenigstens ein zusätzlicher Zwischenspeicherbereich, insbesondere ein zusätzlicher Cachespeicherbereich, enthalten, ist und im Vergleichsmodus von beiden Ausführungseinheiten auf diesen zusätzlichen Zwischenspeicherbereich zugegriffen wird.

Vorteilhaft ist eine Vorrichtung enthalten, dadurch gekennzeichnet, dass wenigstens ein zusätzlicher Zwischenspeicherbereich enthalten ist und der Zwischenspeicherbereich auf den beide Ausführungseinheiten im Vergleichsmodus zugreifen sich aus dem zusätzlichen Zweischenspeicherbereich und einem Zwischenspeichereich der im Performanzmodus einer Ausführungseinheit zugeordnet ist zusammensetzt.

Vorteilhaft ist eine Vorrichtung enthalten, dadurch gekennzeichnet, dass Mittel enthalten sind, die ein Größenverhältnis zwischen dem zusätzlichen Zwischenspeicherbereich und dem einer Ausführungseinheit im Performanzmodus zugeordneten Zwischenspeicherbereich auf die im Vergleichsmodus von beiden Ausführungseinheiten zugegriffen wird konfigurieren.

Vorteilhaft ist eine Vorrichtung enthalten, dadurch gekennzeichnet, dass Mittel enthalten sind, so dass im Vergleichsmodus auf den einer Ausführungseinheit zugeordneten Zwischenspeicherbereich nur lesend zugegriffen werden kann.

Vorteilhaft ist eine Vorrichtung enthalten, dadurch gekennzeichnet, dass Mittel enthalten sind, so dass einer ersten Ausführungseinheit im Performanzmodus ein erster Zwischenspeicherbereich und der zweiten Ausführungseinheit ein zweiter Zwischenspeicherbereich zugeordnet ist und im Vergleichsmodus der ersten Ausführungseinheit ein dritter Zwischenspeicherbereich zugeordnet ist und der zweiten Ausführungseinheit ein vierter Zwischenspeicherbereich.

Vorteilhaft ist eine Vorrichtung enthalten, dadurch gekennzeichnet, dass Mittel enthalten sind, so dass im Vergleichsmodus von beiden Ausführungseinheiten auf den dritten und vierten Zwischenspeicherbereich zugegriffen wird.

Vorteilhaft ist eine Vorrichtung enthalten, dadurch gekennzeichnet, dass Mittel enthalten sind, so dass im Vergleichsmodus von beiden Ausführungseinheiten auf die alle vier Zwischenspeicherbereiche zugegriffen wird.

Vorteilhaft ist eine Vorrichtung enthalten, dadurch gekennzeichnet, dass Mittel enthalten sind, so dass im Vergleichsmodus auf den ersten und zweiten Zwischenspeicherbereich nur lesend zugegriffen werden kann.

Vorteilhaft ist eine Vorrichtung enthalten, dadurch gekennzeichnet, dass Mittel enthalten sind, so dass jeweils ein Größenverhältnis zwischen dem ersten und dritten Zwischenspeicherbereich sowie zwischen dem zweiten und vierten Zwischenspeicherbereich konfigurierbar ist.

Vorteilhaft ist eine Vorrichtung enthalten, dadurch gekennzeichnet, dass die Vergleichsmittel zwischen wenigstens einer Ausführungseinheit und dem Zwischenspeicher lokalisiert sind.

Vorteilhaft ist eine Vorrichtung enthalten, dadurch gekennzeichnet, dass der Zwischenspeicher zwischen wenigstens einer Ausführungseinheit und den Vergleichsmitteln lokalisiert sind.

Vorteilhaft ist eine Vorrichtung enthalten, dadurch gekennzeichnet, dass die Umschaltmittel und die Vergleichsmittel als eine Umschalt- und Vergleichseinheit realisiert sind.

Weitere Vorteile und vorteilhafte Ausgestaltungen ergeben sich aus den Merkmalen der Ansprüche sowie der Beschreibung.

### Figuren

- Figur 1: zeigt ein System C100 mit zwei Ausführungseinheiten von der nur eine im Performanz- und Vergleichsmodus über einen Cache auf einen Bus C 10 zugreift.
- Figur 2: zeigt ein System C100c mit zwei Ausführungseinheiten von denen beide im Performanz- und Vergleichsmodus über einen Cache auf einen Bus C10 zugreifen, von denen aber nur einer im Vergleichsmodus genutzt wird.
- Figur 3: zeigt ein System C100a mit zwei Ausführungseinheiten von denen nur eine im Performanzmodus über einen Cache auf einen Bus C10 zugreift. Im Vergleichsmodus wird kein Cache verwendet.
- Figur 4: zeigt ein System C200 mit zwei Ausführungseinheiten von denen beide im Performanz- und Vergleichsmodus über einen Cache auf einen Bus C10 zugreifen. Im Vergleichsmodus erfolgt der Zugriff auf den Bus über eine separate Busanschlusseinheit.
- Figur 5: zeigt ein System C200a mit zwei Ausführungseinheiten von denen beide im Performanz- und Vergleichsmodus über einen Cache auf einen Bus C10 zugreifen. Im Vergleichsmodus erfolgt der Zugriff auf den Bus über einen separaten Cache und eine separate Busanschlusseinheit.
- Figur 6: zeigt ein System C300 mit zwei Ausführungseinheiten von denen beide im Performanz- und Vergleichsmodus über einen Cache auf einen Bus C10 zugreifen, von denen aber nur einer im Vergleichsmodus genutzt wird. Der im Vergleichsmodus genutzte Cache nutzt intern verschiedene Speicher für seine Aufgabe, abhängig vom aktuellen Modus des System C300.
- Figur 7: zeigt ein System C400 mit zwei Ausführungseinheiten von denen beide im Performanz- und Vergleichsmodus über einen Cache auf einen Bus C10 zugreifen, von denen aber nur einer im Vergleichsmodus genutzt wird. Der im Vergleichsmodus genutzte Cache nutzt intern verschiedene Speicher für seine Aufgabe, abhängig vom aktuellen Modus des System C400. Das Größenverhältnis dieser beiden Speicher zueinander wird durch eine separate Einheit gesteuert.
- Figur 8: zeigt ein System C500 mit zwei Ausführungseinheiten die über eine Cacheeinheit auf den Bus C10 zugreifen. Je nach Modus des System C500 werden die Speicherzugriffe der Ausführungseinheiten unterschiedliche bedient.

### Beschreibung der Ausführungsbeispiele

Eine Ausführungseinheit kann im Folgenden sowohl einen Prozessor/Core/CPU, als auch eine FPU (Floating Point Unit), DSP (Digitaler Signalprozessor), Coprozessor oder ALU (Arithmetic logical Unit) bezeichnen.

Bei manchen Mehrprozessorsystemen wird ein Cache nur deshalb eingesetzt, um Konflikte auf dem System- und/oder Speicherbus zu vermeiden. Wäre nur eine Ausführungseinheit vorhanden, dann würde in diesem Fall kein Cache notwendig sein, da der Speicher schnell genug ist, um die Leseanforderungen einer Ausführungseinheit zu bedienen.

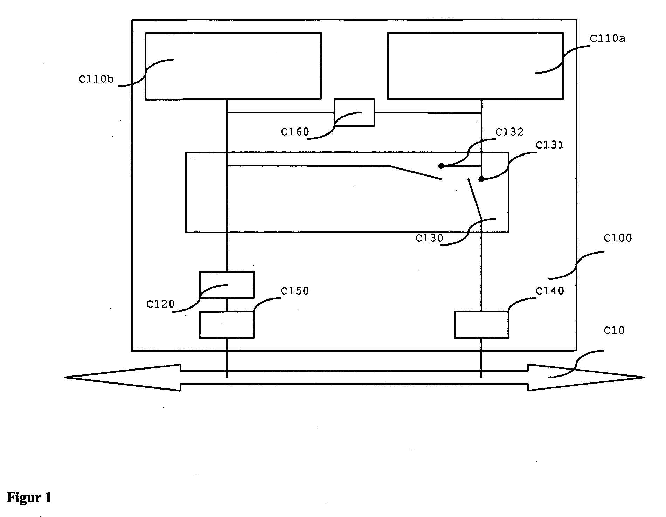

Figur 1 zeigt eine erste Ausführung eines Mehrprozessorsystem C100 mit zwei Ausführungseinheiten C110a und C110b, welches über einen Bus C10 auf einen Speicher zugreifen kann. Die Einheit C130 regelt, je nach dem Modus des Systems C100, wie auf den Bus C10 zugegriffen wird. Im Performanzmodus ist der Schalter C131 geschlossen und der Schalter C132 geöffnet. Somit greift die Ausführungseinheit C110b über den Cache C120 und den Busanschluss C150 auf den Bus C10 zu. Die Ausführungseinheit C110a ist über den Anschluss C140 direkt mit dem Bus C10 verbunden. Ist der Cache C120 richtig dimensioniert, so werden Speicherzugriffe der Ausführungseinheit C110b hauptsächlich aus C120 bedient, so dass nur selten ein Zugriff auf den Bus C10 notwendig ist. Die Speicherzugriffe der Ausführungseinheit C110a führen immer zu Zugriffen auf den Bus C10. Nur wenn ein Speicherzugriff nicht durch den Cache C120 bedient werden kann, wird über die Einheit C150 auf den Bus zugegriffen. Findet zur selben Zeit ein Zugriff auf den Bus C10 durch die Ausführungseinheit C110a über C140 statt, tritt ein Buskonflikt auf, der durch das Busprotokoll aufgelöst werden muss. Da der Cache C120 für die Software nicht sichtbar ist, ist es vorteilhaft, wenn die Einheit C120 auf dem Bus C10 mithorcht ("Bus-Snooping"), ob die Ausführungseinheit C110a über C140 ein Datum im Speicher ändert, welches sich auch im Cache C120 befindet. Ist dies der Fall muss das entsprechende Datum in C120 durch das neue Datum ersetzt oder als ungültig markiert werden.

Im Vergleichsmodus ist der Schalter C132 geschlossen und der Schalter C131 offen. Beide Ausführungseinheiten greifen gemeinsam über den Cache C120 auf den Bus C10 zu. Eine Vergleichseinheit C160 vergleicht die Ausgangssignale beider Ausführungseinheiten und generiert bei Unterschieden ein Fehlersignal. Optional kann die Vergleichseinheit C160 mit der Busanschlusseinheit C150 verbunden sein (hier nicht eingezeichnet) und einen Schreibzugriff verhindern, sollten die Ausgangssignale der beiden Cores differieren. Im Performanzmodus ist die Einheit C160 deaktiviert. Die Deaktivierung der Vergleichseinheit kann auf verschiedene Weise realisiert werden: Entweder wird ein Vergleich durch die Einheit C160 nicht durchgeführt, es werden keine Signale zum Vergleich an die Einheit C160 angelegt oder obwohl der Vergleich stattfindet, wird das Ergebnis ignoriert.

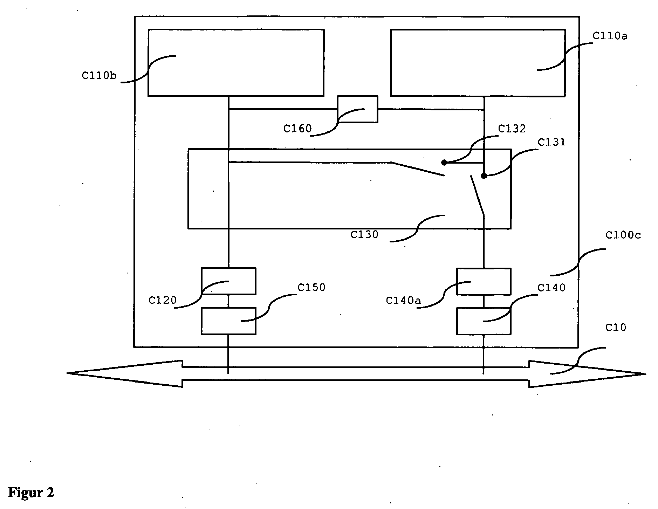

Eine Ausführungsform der Erfindung ist in Figur 2 mit dem System C100c dargestellt. In dieser Ausführungsform arbeiten die aus Figur 1 bekannten Elemente in gleicher Art und Weise. Die Ausführungseinheit C100a greift im Performanzmodus mit geschlossenem Schalter C131 allerdings ebenfalls über einen Cache C140a und den Busanschluss C140 auf den Bus C10 zu. Im Vergleichsmodus wird über den dann geschlossenen Schalter C132 der Cache C120 von beiden Ausführungseinheiten C110a und C110b verwendet, während C140a nur im Performanzmodus von C110a verwendet wird. Die beiden Caches C120 und C140a können verschiedene Größen besitzen und dementsprechend für die in den verschiedenen Modi angepassten Aufgaben optimiert werden.

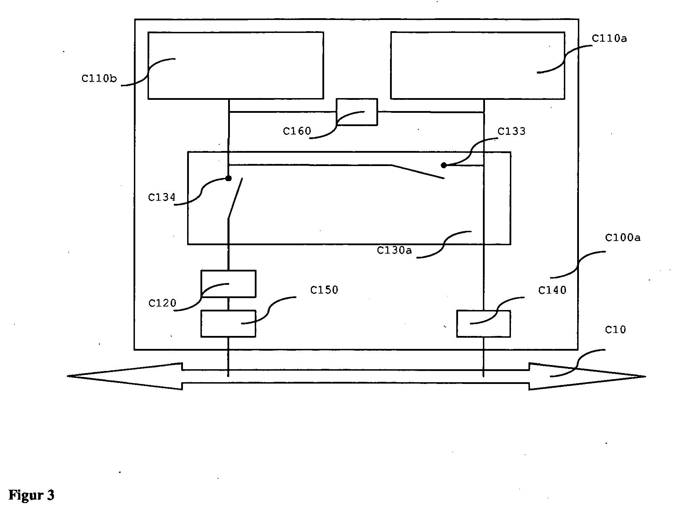

In Figur 3 ist eine weitere Ausführungsform der Erfindung dargestellt. C100a bezeichnet dabei ein Mehrprozessorsystems. Hier ist im Performanzmodus der Schalter C133 offen und der Schalter C134 geschlossen und eine Ausführungseinheit C110b greift über einen Cache C120 und die Busanschlusseinheit C150 auf den Bus C10 zu. Die andere Ausführungseinheit C110a greift direkt über die Einheit C140 auf den Bus C10 zu. Im Vergleichsmodus dagegen ist der Schalter C133 geschlossen und C134 offen und beide Ausführungseinheiten greifen direkt über C140 auf den Bus C10 zu und es wird der Cache C120 nicht verwendet. Eine Vergleichseinheit C160 vergleicht die Ausgangssignale beider Ausführungseinheiten und generiert bei Unterschieden ein Fehlersignal. Optional kann auch hier die Vergleichseinheit C160 mit den Busanschlusseinheiten C140 verbunden sein (hier nicht eingezeichnet) und einen Schreibzugriff verhindern, sollten die Ausgangssignale der beiden Ausführungseinheiten differieren. Im Performanzmodus ist die Einheit C160 deaktiviert. Die Deaktivierung kann auf verschiedene, schon beschriebene Weisen realisiert werden.

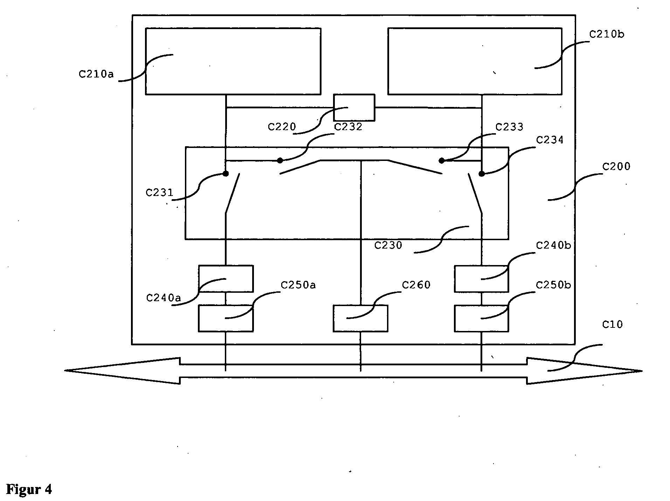

In einer weiteren Ausführung des Mehrprozessorsystems werden ebenfalls Caches nur zur Vermeidung von Zugriffskonflikten auf dem Speicherbus eingesetzt. Figur 4 zeigt ein Mehrprozessorsystem C200 mit zwei Ausführungseinheiten C210a und C210b, welche auf verschiedene Art und Weise über einen Bus C10 auf einen Speicher zugreifen können. Die Einheit C230 regelt, je nach dem Modus des Systems C200, wie auf den Bus C10 zugegriffen wird. Im Performanzmodus sind die Schalter C231 und C234 geschlossen und die Schalter C232 und C233 geöffnet. Somit greift die Ausführungseinheit C210a über den Cache C240a mit Busanschluss C250a und die Ausführungseinheit C210b über den Cache C240b mit dem Busanschluss C250b auf den Bus C10 zu. Nur wenn die Speicherzugriffe aus den jeweiligen Caches der Ausführungseinheiten nicht bedient werden können, muss ein Zugriff auf den Bus C10 erfolgen. Findet zur selben Zeit ein Zugriff auf den Bus C10 durch andere Ausführungseinheiten statt, tritt ein Buskonflikt auf, der durch das Busprotokoll aufgelöst werden muss. Da die Caches C240a und C240b für die Software nicht sichtbar sind, ist es vorteilhaft, wenn ein Datum, welches von einer Ausführungseinheit C210a, C210b in den jeweiligen Cache C240a, C240b geschrieben wird, ebenfalls sofort über den jeweiligen Busanschluss C250a, C250b auf den Bus C10 in den Speicher geschrieben wird ("Write through" Strategie).

Weiterhin ist es vorteilhaft, wenn die Einheiten C240a und C240b (über C250a resp. C250b) auf dem Bus C10 mithorchen ("Bus-Snooping"), ob die Ausführungseinheit C210a über C250a bzw. C210b über C250b ein Datum im Speicher ändert, welches sich auch im jeweils anderen Cache befindet. Ist dies der Fall muss das entsprechende Datum durch das neue Datum im betroffen Cache ersetzt oder als ungültig markiert werden.

Im Vergleichsmodus sind die Schalter C232 und C233 geschlossen und die Schalter C231 und C234 offen. Beide Ausführungseinheiten greifen gemeinsam über C260 auf den Bus C10 zu. Die Caches (C240a, C240b) werden nicht verwendet. Eine Vergleichseinheit C220 vergleicht die Ausgangssignale beider Ausführungseinheiten und generiert bei Unterschieden ein Fehlersignal. Optional kann die Vergleichseinheit C220 mit der Busanschlusseinheit C260 verbunden sein (hier nicht eingezeichnet) und einen Schreibzugriff verhindern, sollten die Ausgangssignale der beiden Ausführungseinheiten differieren. Im Performanzmodus ist die Einheit C220 deaktiviert. Die Deaktivierung kann auf verschiedene, schon beschriebene Weisen realisiert werden.

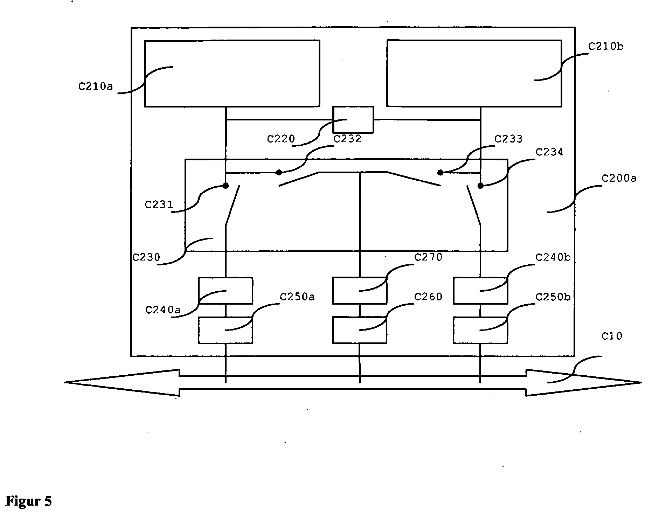

Figur 5 zeigt eine weitere Ausführungsform C200a des Mehrprozessorsystems, in der gegenüber der Ausführungsform C200 dargestellt in Figur 4 ein zusätzlicher Cache 270 für den Vergleichsmodus eingefügt wurde. Die schon bekannten Komponenten aus Figur 4 arbeiten in gleichen wie dort beschriebenen Art und Weise. Auch in diesem System ist es von Vorteil, wenn für alle Caches eine "write through" Strategie verwendet und der Inhalt aller Caches durch "Bus snooping" konsistent gehalten wird.

Die hier vorher beschriebenen Varianten nach den Figuren 4 und 5 lassen sich auf mehr als zwei Ausführungseinheiten erweitern. Je Ausführungseinheit sind in diesen Fall eine Cacheeinheit und eine Busanschlusseinheit vorhanden, die im Performanzmodus genutzt werden. Im Vergleichsmodus greifen alle Ausführungseinheiten über die Busanschlusseinheit C260 (optional mit einem Cache C270) auf den Bus C10 zu.

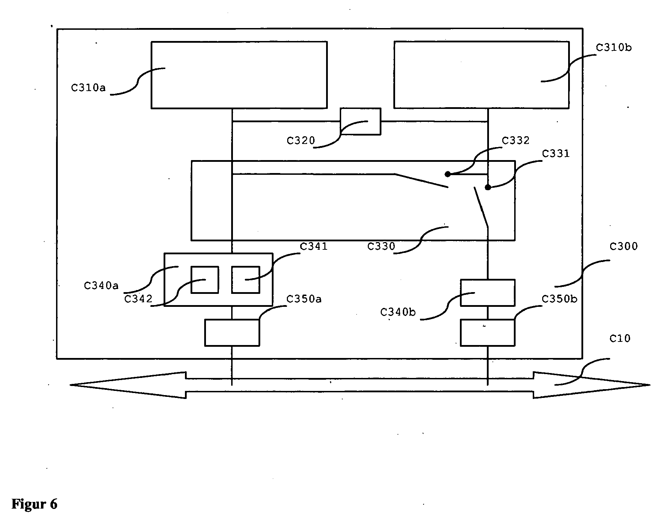

Eine weitere Ausführungsform der Erfindung ist in Figur 6 dargestellt. Auch hier besteht die Prozessoreinheit C300 aus mindestens zwei Ausführungseinheiten C310a und C310b, welche jeweils über einen Cache C340a, 340b und einen Busanschluss C350a, C350b über den Bus C10 auf einen Speicher zugreifen. Im Performanzmodus ist der Schalter C332 offen und der Schalter C331 in der Einheit C330 geschlossen. Die Ausführungseinheit C310a greift in dieser Konfiguration über den Cache C340a und den Busanschluss C350a auf den Bus C10 zu und die Ausführungseinheit C310b über den Cache C340b und den Busanschluss C350b.

Im Vergleichsmodus ist in der Umschalteinheit C330 der Schalter C332 geschlossen und der Schalter C331 offen. Jetzt greifen beide Ausführungseinheiten über den Cache C340a und den Busanschluss C350a auf den Bus C10 zu. Die Einheit C340a besteht selbst wiederum aus zwei separaten Cachespeichern oder Cachebereichen C341,C342, die für das Caching verwendet werden. Im Performanzmodus wird nur der Speicher/Bereich C341 verwendet, während im Vergleichsmodus zusätzlich zum Speicher/Bereich C341 der Speicher/Bereich C342 für das Caching verwendet wird. Eine Vergleichseinheit C320 vergleicht im Vergleichsmodus die Ausgangssignale beider Ausführungseinheiten und generiert bei Unterschieden ein Fehlersignal. Optional kann auch hier die Vergleichseinheit C320 mit den Busanschlusseinheiten C350a verbunden sein (hier nicht eingezeichnet) und einen Schreibzugriff verhindern, sollten die Ausgangssignale der beiden Cores im Vergleichsmodus differieren. Im Performanzmodus ist die Vergleichseinheit C320 wie schon für die Vergleichseinheit C160, dargestellt in Figur 1, beschrieben, deaktiviert.

In einer weiteren Ausführungsform kann die Einheit C340a so aufgebaut sein, dass im Vergleichsmodus der Speicher C341 und C342 zwar ebenso zusammen benutzt, aber nur Inhalte aus dem Speicher C342 im Vergleichsmodus verdrängt und durch andere Inhalte ersetzt werden können.

Allen Ausführungsformen in Ausgestaltung von Figur 6 lassen sich auf mehr als zwei Ausführungseinheiten erweitern. Je Ausführungseinheit sind in diesen Fall eine Cacheeinheit und eine Busanschlusseinheit vorhanden, die im Performanzmodus genutzt werden. Im Vergleichsmodus greifen alle Ausführungseinheiten über den Cache C340a und die Busanschlusseinheit C350a auf den Bus C10 zu.

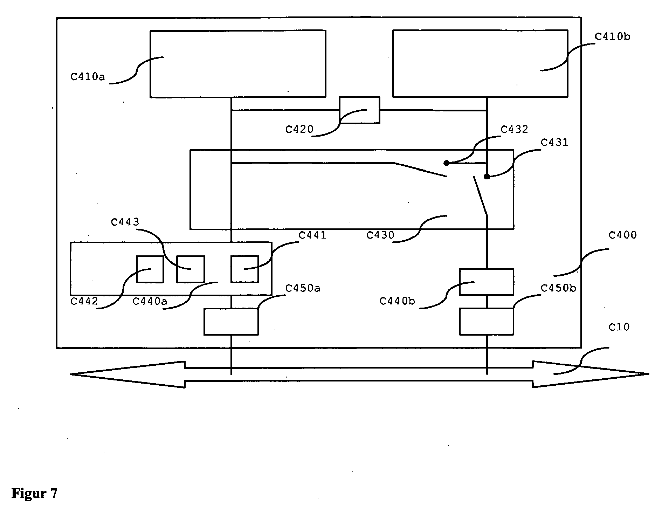

Eine weitere mögliche Ausführungsform der Erfindung ist in Figur 7 dargestellt. Auch hier besteht die Prozessoreinheit C400 aus mindestens zwei Ausführungseinheiten C410a und C410b, welche jeweils über einen Cache (C440a, 440b) und einen Busanschluss (C450a, C450b) auf den Bus C10 auf den (Haupt-)Speicher zugreifen.

Im Performanzmodus ist der Schalter C432 offen und der Schalter C431 in der Einheit C430 geschlossen. Die Ausführungseinheit C410a greift in dieser Konfiguration über den Cache C440a und den Busanschluss C450a auf den Bus C10 zu und die Ausführungseinheit C410b über den Cache C440b und den Busanschluss C450b.

Im Vergleichsmodus ist in der Umschalteinheit C430 der Schalter C432 geschlossen und der Schalter C431 offen. Jetzt greifen beide Ausführungseinheiten über den Cache C440a und den Busanschluss C450a auf den Bus C10 zu. Die Einheit C440a besteht selbst wiederum aus zwei separaten Cachespeichern oder Bereichen C441, C442, die für das Caching verwendet werden. Im Performanzmodus wird nur der Speicher/Bereich C441 verwendet, während im Vergleichsmodus der Speicher/Bereich C442 für das Caching verwendet wird. Die Summe der Größe beider Speicher/Bereiche C441 + C442 ist konstant, aber der Verhältnis der Größe zwischen C441 und C442 wird durch die Einheit C443 gesteuert. Durch diese Einheit C443 ist eine Änderung des Verhältnisses im Betrieb möglich.

Eine Vergleichseinheit C420 vergleicht im Vergleichsmodus die Ausgangssignale beider Ausführungseinheiten und generiert bei Unterschieden ein Fehlersignal. Optional kann auch hier die Vergleichseinheit C420 mit den Busanschlusseinheiten C450a verbunden sein (hier nicht eingezeichnet) und einen Schreibzugriff verhindern, sollten die Ausgangssignale der beiden Cores im Vergleichsmodus differieren. Im Performanzmodus ist die Einheit C420 deaktiviert, wie schon für Vergleichseinheit C160 aus Figur 1 beschrieben.

Die Einheit C440a kann jetzt unter Beibehaltung der Funktion von Einheit C443 wie folgt ausgeführt werden:
1. Im Vergleichsmodus werden beide Speicher C441 und C442 für den Cache verwendet.
2. Im Vergleichsmodus werden beide Speicher C441 und C442 für den Cache verwendet, wobei aber nur Inhalte aus dem Speicher C442 im Vergleichsmodus verdrängt und durch andere Inhalte ersetzt werden können.

Allen Ausführungsformen in der Ausgestaltung von Figur 7 lassen sich auf mehr als zwei Ausführungseinheiten erweitern. Je Ausführungseinheit sind in diesen Fall eine Cacheeinheit und eine Busanschlusseinheit vorhanden, die im Performanzmodus genutzt werden. Im Vergleichsmodus greifen alle Ausführungseinheiten über den Cache C440a und die Busanschlusseinheit C450a auf den Bus C10 zu.

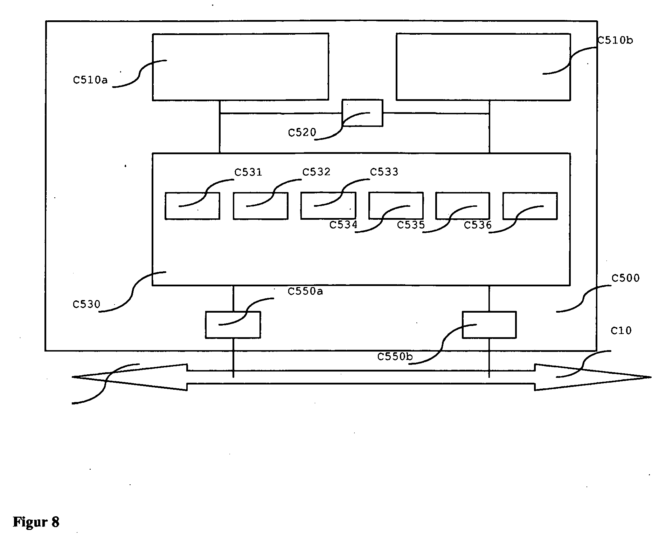

In Figur 8 ist eine weitere mögliche Ausführungsform gezeigt. In einem Prozessorsystem C500 existieren mindestens zwei Ausführungseinheiten C510a und C510b. Beide Ausführungseinheiten sind mit einer Cacheeinheit C530 verbunden. Diese Einheit C530 besitzt je Ausführungseinheit eine Busanschlusseinheit C550a, C550b über die ein Zugriff auf den Bus C10 auf einen Speicher möglich ist. Die Cacheeinheit C530 besitzt je angeschlossener Ausführungseinheit zwei Cachespeicher (hier C531 und C533 für C510a und C534 und C536 für C510b). Die Summe der Größen dieser Speicherpaare ist konstant, das Verhältnis kann aber über jeweils eine Einheit (C532 für C531, C533 und C535 für C534, C536) im Betrieb geändert werden.

Im Performanzmodus werden Speicherzugriffe der Ausführungseinheiten immer von dem Speicherpaar "gecached", welches der Ausführungseinheit zugeordnet ist. Dabei wird nur einer der beiden Cachespeicher verwendet (hier C531 für C510a und C534 für C510b). Können Speicherzugriffe der Ausführungseinheit nicht aus dem Cachespeicher bedient werden, werden die notwendigen Buszugriffe auf C10 immer über den zur Ausführungseinheit zugeordneten Busanschluss getätigt (hier C550a für C510a und C550b für C510b). Zugriffe im Performanzmodus durch Ausführungseinheiten, die gleichzeitig stattfinden, können auch gleichzeitig durch die Einheit C530 bedient werden, es sei denn, es tritt durch den gleichzeitigen Zugriff auf C10 ein Buskonflikt auf.

Im Vergleichsmodus werden Speicherzugriffe der Ausführungseinheiten durch die Cachspeicher bedient, die nicht im Performanzmodus verwendet werden (hier C533 und 536). Welcher Busanschluss für einen Buszugriff verwendet wird ist beliebig. Eine Vergleichseinheit C520 vergleicht im Vergleichsmodus die Ausgangssignale aller Ausführungseinheiten und generiert bei Unterschieden ein Fehlersignal. Optional kann auch hier die Vergleichseinheit C520 mit den Busanschlusseinheiten C550a, C550b verbunden sein (hier nicht eingezeichnet) und einen Schreibzugriff verhindern, sollten die Ausgangssignale der beiden Cores im Vergleichsmodus differieren. Im Performanzmodus ist die Einheit C520 deaktiviert. Die Deaktivierung kann erfolgen entsprechend wie bei Vergleichseinheit C160 aus Figur 1.

In einer weiteren Ausführungsform kann die Einheit C530 so aufgebaut sein, dass im Vergleichsmodus sämtliche Cachespeicher (hier C531, C533, C534, C536) verwendet wird aber nur Inhalte aus den Cachespeichern verworfen und ersetzt werden, die im Performanzmodus nicht verwendet werden.

Für alle hier beispielhaft dargestellten Implementierungen gilt, dass die Umschalt- und Vergleichseinheit immer zwischen den Ausführungseinheiten und ihren zugehörigen Caches liegt. Wird im Vergleichsmodus ein Cache verwendet, so muss dieser mit ECC oder Parity abgesichert sein, damit auch hier Fehler erkannt werden. Zusätzlich ist es von Vorteil, wenn für die Caches eine "write through" Strategie verwendet und der Inhalt der Caches durch "Bus snooping" konsistent gehalten wird.

## Patentansprüche

1. Verfahren zur Steuerung eines Speicherzugriffs bei einem Rechnersystem mit wenigstens zwei Ausführungseinheiten, wobei je Ausführungseinheit ein Zwischenspeicherbereich, insbesondere ein Cachespeicherbereich vorgesehen ist und weiterhin Umschaltmittel und Vergleichsmittel vorgesehen sind, wobei zwischen einem Performanzmodus und einem Vergleichsmodus umgeschaltet wird, **dadurch gekennzeichnet, dass** im Performanzmodus jede Ausführungseinheit auf den dieser jeweils zugeordneten Zwischenspeicherbereich zugreift und im Vergleichsmodus beide Ausführungseinheiten auf einen vorgebbaren Zwischenspeicherbereich zugreifen, wobei die Größen der Zwischenspeicherbereiche mittels des Umschaltmittels konfigurierbar sind, indem die genannten Größen dementsprechend für die in dem verschiedemen Modi angepaßten Aufgaben optimiert werden.

2. Verfahren nach Anspruch 1, **dadurch gekennzeichnet, dass** der Zwischenspeicherbereich auf den im Vergleichsmodus von beiden Ausführungseinheiten zugegriffen wird dem Zwischenspeicherbereich der im Performanzmodus einer Ausführungseinheit zugeordnet ist entspricht.

3. Verfahren nach Anspruch 1, **dadurch gekennzeichnet, dass** wenigstens ein zusätzlicher Zwischenspeicherbereich, insbesondere ein zusätzlicher Cachespeicherbereich, vorgesehen ist und im Vergleichsmodus von beiden Ausführungseinheiten auf diesen zusätzlichen Zwischenspeicherbereich zugegriffen wird.

4. Verfahren nach Anspruch 1, **dadurch gekennzeichnet, dass** wenigstens ein zusätzlicher Zwischenspeicherbereich vorgesehen ist und der Zwischenspeicherbereich auf den beide Ausführungseinheiten im Vergleichsmodus zugreifen sich aus dem zusätzlichen Zwischenspeicherbereich und einem Zwischenspeichereich der im Performanzmodus einer Ausführungseinheit zugeordnet ist zusammensetzt.

5. Verfahren nach Anspruch 4, **dadurch gekennzeichnet, dass** ein Größenverhältnis zwischen dem zusätzlichen Zwischenspeicherbereich und dem einer Ausführungseinheit im Performanzmodus zugeordneten Zwischenspeicherbereich auf die im Vergleichsmodus von beiden Ausführungseinheiten zugegriffen wird konfigurierbar ist.

6. Verfahren nach Anspruch 4, **dadurch gekennzeichnet, dass** im Vergleichsmodus auf den einer Ausführungseinheit zugeordneten Zwischenspeicherbereich nur lesend zugegriffen werden kann.

7. Verfahren nach Anspruch 1, **dadurch gekennzeichnet, dass** einer ersten Ausführungseinheit im Performanzmodus ein erster Zwischenspeicherbereich und der zweiten Ausführungseinheit ein zweiter Zwischenspeicherbereich zugeordnet ist und im Vergleichsmodus der ersten Ausführungseinheit ein dritter Zwischenspeicherbereich zugeordnet ist und der zweiten Ausführungseinheit ein vierter Zwischenspeicherbereich.

8. Verfahren nach Anspruch 7, **dadurch gekennzeichnet, dass** im Vergleichsmodus von beiden Ausführungseinheiten auf den dritten und vierten Zwischenspeicherbereich zugegriffen wird.

9. Verfahren nach Anspruch 7, **dadurch gekennzeichnet, dass** im Vergleichsmodus von beiden Ausführungseinheiten auf die alle vier Zwischenspeicherbereiche zugegriffen wird.

10. Verfahren nach Anspruch 9, **dadurch gekennzeichnet, dass** im Vergleichsmodus auf den ersten und zweiten Zwischenspeicherbereich nur lesend zugegriffen werden kann.

11. Verfahren nach Anspruch 8 oder 10, **dadurch gekennzeichnet, dass** jeweils ein Größenverhältnis zwischen dem ersten und dritten Zwischenspeicherbereich sowie zwischen dem zweiten und vierten Zwischenspeicherbereich konfigurierbar ist.

12. Vorrichtung zur Steuerung eines Speicherzugriffs bei einem Rechnersystem mit wenigstens zwei Ausführungseinheiten, wobei je Ausführungseinheit ein Zwischenspeicherbereich, insbesondere ein Cachespeicherbereich vorgesehen ist und weiterhin Umschaltmittel und Vergleichsmittel vorgesehen sind, wobei zwischen einem Performanzmodus und einem Vergleichsmodus umgeschaltet wird, **dadurch gekennzeichnet, dass** im Performanzmodus jede Ausführungseinheit auf den dieser jeweils zugeordneten Zwischenspeicherbereich zugreift und im Vergleichsmodus beide Ausführungseinheiten auf einen vorgebbaren Zwischenspeicherbereich zugreifen, wobei die Größen der Zwischenspeicherbereiche mittels des Umschaltmittels konfigurierbar sind, indem die genannten Größen dementsprechend für die in dem verschiedemen Modi angepaßten Aufgaben optimiert werden.

13. Vorrichtung nach Anspruch 12, **dadurch gekennzeichnet, dass** der Zwischenspeicherbereich auf den im Vergleichsmodus von beiden Ausführungseinheiten zugegriffen wird dem Zwischenspeicherbereich der im Performanzmodus einer Ausführungseinheit zugeordnet ist entspricht.

14. Vorrichtung nach Anspruch 12, **dadurch gekennzeichnet, dass** wenigstens ein zusätzlicher Zwischenspeicherbereich, insbesondere ein zusätzlicher Cachespeicherbereich, enthalten ist und im Vergleichsmodus von beiden Ausführungseinheiten auf diesen zusätzlichen Zwischenspeicherbereich zugegriffen wird.

15. Vorrichtung nach Anspruch 12, **dadurch gekennzeichnet, dass** wenigstens ein zusätzlicher Zwischenspeicherbereich enthalten ist und der Zwischenspeicherbereich auf den beide Ausführungseinheiten im Vergleichsmodus zugreifen sich aus dem zusätzlichen Zwischenspeicherbereich und einem Zwischenspeichereich der im Performanzmodus einer Ausführungseinheit zugeordnet ist zusammensetzt.

16. Vorrichtung nach Anspruch 15, **dadurch gekennzeichnet, dass** Mittel enthalten sind, die ein Größenverhältnis zwischen dem zusätzlichen Zwischenspeicherbereich und dem einer Ausführungseinheit im Performanzmodus zugeordneten Zwischenspeicherbereich auf die im Vergleichsmodus von beiden Ausführungseinheiten zugegriffen wird konfigurieren.

17. Vorrichtung nach Anspruch 15, **dadurch gekennzeichnet, dass** Mittel enthalten sind, so dass im Vergleichsmodus auf den einer Ausführungseinheit zugeordneten Zwischenspeicherbereich nur lesend zugegriffen werden kann.

18. Vorrichtung nach Anspruch 12, **dadurch gekennzeichnet, dass** Mittel enthalten sind, so dass einer ersten Ausführungseinheit im Performanzmodus ein erster Zwischenspeicherbereich und der zweiten Ausführungseinheit ein zweiter Zwischenspeicherbereich zugeordnet ist und im Vergleichsmodus der ersten Ausführungseinheit ein dritter Zwischenspeicherbereich zugeordnet ist und der zweiten Ausführungseinheit ein vierter Zwischenspeicherbereich.

19. Vorrichtung nach Anspruch 18, **dadurch gekennzeichnet, dass** Mittel enthalten sind, so dass im Vergleichsmodus von beiden Ausführungseinheiten auf den dritten und vierten Zwischenspeicherbereich zugegriffen wird.

20. Vorrichtung nach Anspruch 18, **dadurch gekennzeichnet, dass** Mittel enthalten sind, so dass im Vergleichsmodus von beiden Ausführungseinheiten auf die alle vier Zwischenspeicherbereiche zugegriffen wird.

21. Vorrichtung nach Anspruch 20, **dadurch gekennzeichnet, dass** Mittel enthalten sind, so dass im Vergleichsmodus auf den ersten und zweiten Zwischenspeicherbereich nur lesend zugegriffen werden kann.

22. Vorrichtung nach Anspruch 19 oder 21, **dadurch gekennzeichnet, dass** Mittel enthalten sind, so dass jeweils ein Größenverhältnis zwischen dem ersten und dritten Zwischenspeicherbereich sowie zwischen dem zweiten und vierten Zwischenspeicherbereich konfigurierbar ist.

23. Vorrichtung nach Anspruch 12, **dadurch gekennzeichnet, dass** die Vergleichsmittel zwischen wenigstens einer Ausführungseinheit und dem Zwischenspeicher lokalisiert sind.

24. Vorrichtung nach Anspruch 12, **dadurch gekennzeichnet, dass** der Zwischenspeicher zwischen wenigstens einer Ausführungseinheit und den Vergleichsmitteln lokalisiert sind.

25. Vorrichtung nach Anspruch 12 und 23 oder 12 und 24, **dadurch gekennzeichnet, dass** die Umschaltmittel und die Vergleichsmittel als eine Umschalt- und Vergleichseinheit realisiert sind.

## Claims

1. Method for controlling memory access in a computer system having at least two execution units, a buffer memory area, in particular a cache memory area, being provided for each execution unit, and changeover means and comparison means also being provided, a changeover being made between a performance mode and a comparison mode, **characterized in that** each execution unit accesses the buffer memory area respectively assigned to it in the performance mode and both execution units access a predefinable buffer memory area in the comparison mode, the sizes of the buffer memory areas being able to be configured using the changeover means by virtue of said sizes being optimized accordingly for the tasks adapted in the different modes.

2. Method according to Claim 1, **characterized in that** the buffer memory area which is accessed by both execution units in the comparison mode corresponds to the buffer memory area which is assigned to an execution unit in the performance mode.

3. Method according to Claim 1, **characterized in that** at least one additional buffer memory area, in particular an additional cache memory area, is provided and both execution units access this additional buffer memory area in the comparison mode.

4. Method according to Claim 1, **characterized in that** at least one additional buffer memory area is provided and the buffer memory area which is accessed by both execution units in the comparison mode is composed of the additional buffer memory area and a buffer memory area which is assigned to an execution unit in the performance mode.

5. Method according to Claim 4, **characterized in that** a size ratio between the additional buffer memory area and the buffer memory area which is assigned to an execution unit in the performance mode and is accessed by both execution units in the comparison mode can be configured.

6. Method according to Claim 4, **characterized in that** only read access to the buffer memory area assigned to an execution unit can be effected in the comparison mode.

7. Method according to Claim 1, **characterized in that** a first buffer memory area is assigned to a first execution unit and a second buffer memory area is assigned to the second execution unit in the performance mode and a third buffer memory area is assigned to the first execution unit and a fourth buffer memory area is assigned to the second execution unit in the comparison mode.

8. Method according to Claim 7, **characterized in that** the third and fourth buffer memory areas are accessed by both execution units in the comparison mode.

9. Method according to Claim 7, **characterized in that** all four buffer memory areas are accessed by both execution units in the comparison mode.

10. Method according to Claim 9, **characterized in that** only read access to the first and second buffer memory areas can be effected in the comparison mode.

11. Method according to Claim 8 or 10, **characterized in that** a size ratio between the first and third buffer memory areas and between the second and fourth buffer memory areas can be respectively configured.

12. Device for controlling memory access in a computer system having at least two execution units, a buffer memory area, in particular a cache memory area, being provided for each execution unit, and changeover means and comparison means also being provided, a changeover being made between a performance mode and a comparison mode, **characterized in that** each execution unit accesses the buffer memory area respectively assigned to it in the performance mode and both execution units access a predefinable buffer memory area in the comparison mode, the sizes of the buffer memory areas being able to be configured using the changeover means by virtue of said sizes being optimized accordingly for the tasks adapted in the different modes.

13. Device according to Claim 12, **characterized in that** the buffer memory area which is accessed by both execution units in the comparison mode corresponds to the buffer memory area which is assigned to an execution unit in the performance mode.

14. Device according to Claim 12, **characterized in that** at least one additional buffer memory area, in particular an additional cache memory area, is included and both execution units access this additional buffer memory area in the comparison mode.

15. Device according to Claim 12, **characterized in that** at least one additional buffer memory area is included and the buffer memory area which is accessed by both execution units in the comparison mode is composed of the additional buffer memory area and a buffer memory area which is assigned to an execution unit in the performance mode.

16. Device according to Claim 15, **characterized in that** means which configure a size ratio between the additional buffer memory area and the buffer memory area which is assigned to an execution unit in the performance mode and is accessed by both execution units in the comparison mode are included.

17. Device according to Claim 15, **characterized in that** means are included, with the result that only read access to the buffer memory area assigned to an execution unit can be effected in the comparison mode.

18. Device according to Claim 12, **characterized in that** means are included, with the result that a first buffer memory area is assigned to a first execution unit and a second buffer memory area is assigned to the second execution unit in the performance mode and a third buffer memory area is assigned to the first execution unit and a fourth buffer memory area is assigned to the second execution unit in the comparison mode.

19. Device according to Claim 18, **characterized in that** means are included, with the result that the third and fourth buffer memory areas are accessed by both execution units in the comparison mode.

20. Device according to Claim 18, **characterized in that** means are included, with the result that all four buffer memory areas are accessed by both execution units in the comparison mode.

21. Device according to Claim 20, **characterized in that** means are included, with the result that only read access to the first and second buffer memory areas can be effected in the comparison mode.

22. Device according to Claim 19 or 21, **characterized in that** means are included, with the result that a size ratio between the first and third buffer memory areas and between the second and fourth buffer memory areas can be respectively configured.

23. Device according to Claim 12, **characterized in that** the comparison means are located between at least one execution unit and the buffer memory.

24. Device according to Claim 12, **characterized in that** the buffer memory is located between at least one execution unit and the comparison means.

25. Device according to Claims 12 and 23 or 12 and 24, **characterized in that** the changeover means and the comparison means are in the form of a changeover and comparison unit.

## Revendications

1. Procédé de commande d'un accès de mémoire dans un système de calculateur comportant au moins deux unités d'exécution,
chaque unité d'exécution ayant une zone de mémoire intermédiaire notamment une zone de mémoire cache, des moyens de commutation et de comparaison étant également prévus, et
on commute entre un mode de performance et un mode de comparaison,
**caractérisé en ce qu'**
en mode de performance, chaque unité d'exécution accède à la zone de mémoire intermédiaire qui lui est respectivement associée et en mode de comparaison, les deux unités d'exécution accèdent à une zone de mémoire intermédiaire, prédéfinie,
la taille des zones de mémoire intermédiaires étant configurée à l'aide du moyen de commutation **en ce que** les tailles sont optimisées en fonction des tâches adaptées aux différents modes.

2. Procédé selon la revendication 1,
**caractérisé en ce que**
la zone de mémoire intermédiaire à laquelle les deux unités d'exécution accèdent en mode de comparaison, correspond à la zone de mémoire intermédiaire associée à une unité d'exécution en mode de performance.

3. Procédé selon la revendication 1,
**caractérisé par**
au moins une zone de mémoire intermédiaire supplémentaire notamment une zone de mémoire cache supplémentaire, et en mode de comparaison, les deux unités d'exécution accèdent à cette zone supplémentaire de mémoire intermédiaire.

4. Procédé selon la revendication 1,
**caractérisé par**
au moins une zone de mémoire intermédiaire supplémentaire, et la zone de mémoire intermédiaire à laquelle les deux unités d'exécution accèdent en mode de comparaison, se compose de la zone supplémentaire de mémoire intermédiaire et d'une zone de mémoire intermédiaire associée à une unité d'exécution en mode de performance.

5. Procédé selon la revendication 4,
**caractérisé en ce qu'**
on configure le rapport des dimensions entre la zone supplémentaire de mémoire intermédiaire et la zone de mémoire intermédiaire associée à une unité d'exécution en mode de performance en fonction des deux unités d'exécution en mode de comparaison.

6. Procédé selon la revendication 4,
**caractérisé en ce qu'**
en mode de comparaison, on accède en lecture seule à la zone de mémoire intermédiaire associée à une unité d'exécution.

7. Procédé selon la revendication 1,
**caractérisé en ce qu'**
une première zone de mémoire intermédiaire est associée à la première unité d'exécution et une seconde zone de mémoire intermédiaire est associée à la seconde unité d'exécution en mode de performance, et
en mode de comparaison, une troisième zone de mémoire intermédiaire est associée à la première unité d'exécution et une quatrième zone de mémoire intermédiaire est associée à la seconde unité d'exécution.

8. Procédé selon la revendication 1,
**caractérisé en ce qu'**
en mode de comparaison, les deux unités d'exécution accèdent à la troisième et à la quatrième zone de mémoire intermédiaire.

9. Procédé selon la revendication 1,
**caractérisé en ce qu'**
en mode de comparaison, les deux unités d'exécution accèdent à toutes les quatre zones de mémoire intermédiaire.

10. Procédé selon la revendication 9,
**caractérisé en ce qu'**
en mode de comparaison, l'accès à la première et à la seconde zone de mémoire intermédiaire ne se fait qu'en lecture seule.

11. Procédé selon la revendication 8 ou 10,
**caractérisé en ce qu'**
on configure un rapport des dimensions respectivement entre la première et la troisième zone de mémoire intermédiaire ainsi qu'entre la seconde et la quatrième zone de mémoire intermédiaire.

12. Dispositif de commande d'un accès de mémoire dans le cas d'un système de calculateur ayant au moins deux unités d'exécution, et par unité d'exécution, il est prévu une zone de mémoire intermédiaire notamment une zone de mémoire cache et des moyens de commutation et de comparaison sont prévus, et
on commute entre un mode de performance et un mode de comparaison,
**caractérisé en ce qu'**
en mode de performance, chaque unité d'exécution accède à la zone de mémoire intermédiaire qui lui est respectivement associée et en mode de comparaison, les deux unités d'exécution accèdent à une zone de mémoire intermédiaire, prédéfinie,
la dimension des zones de mémoire intermédiaire étant configurée à l'aide du moyen de commutation **en ce que** les dimensions sont optimisées en fonction des tâches adaptées aux différents modes.

13. Dispositif selon la revendication 12,
**caractérisé en ce que**
la zone de mémoire intermédiaire à laquelle les deux unités d'exécution accèdent en mode de comparaison correspond à la zone de mémoire intermédiaire associée à une unité d'exécution en mode de performance.

14. Dispositif selon la revendication 12,
**caractérisé par**
au moins une zone de mémoire intermédiaire supplémentaire notamment une zone de mémoire cache supplémentaire, et en mode de comparaison, les deux unités d'exécution accèdent à cette zone supplémentaire de mémoire intermédiaire.

15. Dispositif selon la revendication 12,
**caractérisé en ce qu'**
il comporte au moins une zone supplémentaire de mémoire intermédiaire, et
la zone de mémoire intermédiaire à laquelle accèdent les deux unités d'exécution en mode de comparaison se compose de la zone supplémentaire de mémoire intermédiaire et d'une zone de mémoire intermédiaire associée en mode de performance à une unité d'exécution.

16. Dispositif selon la revendication 15,
**caractérisé par**
des moyens qui configurent le rapport des dimensions entre la zone supplémentaire de mémoire intermédiaire et la zone de mémoire intermédiaire associée à une unité d'exécution en mode de performance à laquelle les deux unités d'exécution accèdent en mode de comparaison.

17. Dispositif selon la revendication 15,
**caractérisé par**
des moyens pour qu'en mode de comparaison, l'accès à la zone de mémoire intermédiaire associée à une unité d'exécution ne puisse se faire qu'en lecture seule.

18. Dispositif selon la revendication 12,
**caractérisé par**
des moyens tels qu'en mode de performance, une première zone de mémoire intermédiaire est associée à la première unité d'exécution et une seconde zone de mémoire intermédiaire est associée à la seconde unité d'exploitation, et qu'en mode de comparaison, une troisième zone de mémoire intermédiaire est associée à la première unité d'exécution et une quatrième zone de mémoire intermédiaire est associée à la seconde unité d'exécution.

19. Dispositif selon la revendication 18,
**caractérisé par**
des moyens de façon qu'en mode de comparaison, les deux unités d'exécution puissent accéder à la troisième et à la quatrième zone de mémoire intermédiaire.

20. Dispositif selon la revendication 18,
**caractérisé par**
des moyens de façon qu'en mode de comparaison, les deux unités d'exécution puissent accéder à toutes les quatre zones de mémoire intermédiaire.

21. Dispositif selon la revendication 20,
**caractérisé par**
des moyens de façon qu'en mode de comparaison, l'accès à la première et à la seconde zone de mémoire intermédiaire ne puisse se faire qu'en lecture seule.

22. Dispositif selon la revendication 19 ou 21,
**caractérisé en ce qu'**
il comporte des moyens de façon à configurer respectivement un rapport des dimensions entre la première et la troisième zone de mémoire intermédiaire ainsi qu'entre la seconde et la quatrième zone de mémoire intermédiaire.

23. Dispositif selon la revendication 12,
**caractérisé en ce que**
les moyens de comparaison sont localisés entre au moins une unité d'exécution et la mémoire intermédiaire.

24. Dispositif selon la revendication 12,
**caractérisé en ce que**
la mémoire intermédiaire est localisée entre au moins une unité d'exécution et les moyens de comparaison.

25. Dispositif selon les revendications 12 et 23 et 12 et 24,
**caractérisé en ce que**
les moyens de commutation et les moyens de comparaison sont réalisés sous la forme d'une unité de commutation et de comparaison.
